# EUROPÄISCHE PATENTANMELDUNG

(11) **EP 1 681 200 A2**
(43) Veröffentlichungstag der Anmeldung: **19.07.2006**
(21) Anmeldenummer: 05023950.8
(22) Anmeldetag: 03.11.2005
(51) Int. Cl.: B60N 3/02

(54) **Handhabe**

(30) Priorität: 22.12.2004 DE 202004020041 U
(71) Anmelder: YMOS GmbH, 55743 Idar-Oberstein (DE)
(72) Erfinder: Buschmeier, Konrad, 33154 Salzkotten (DE)
(74) Vertreter: Ostermann, Thomas

(57) **Zusammenfassung**

Die Erfindung betrifft eine Handhabe für Fahrzeuge mit einem Griffabschnitt zum manuellen Erfassen der Handhabe und mit einem Anlenkungsabschnitt zur bewegbaren Anbindung des Griffabschnitts an ein Lagerteil, wobei ein Außenteil enthaltend ein Metallmaterial und durch ein Innenteil enthaltend ein Kunststoffmaterial, wobei das Außenteil mit dem Innenteil kraftschlüssig und/oder formschlüssig und/oder stoffschlüssig verbunden ist.

## Beschreibung

Die Erfindung betrifft eine Handhabe für Fahrzeuge mit einem Griffabschnitt zum manuellen Erfassen der Handhabe und mit einem Anlenkungsabschnitt zur bewegbaren Anbindung des Griffabschnitts an ein Lagerteil.

Handhaben für Fahrzeuge, insbesondere Türgriffe, Türinnenbetätigungshebel und dergleichen werden heutzutage üblicher Weise aus einem Kunststoffmaterial gefertigt. Beispielsweise kann die Handhabe im Spritzgießverfahren hergestellt sein, wobei das gegossene Kunststoffformteil nach elektrisch leitfähiger Grundierung mit einem Farbpulver beschichtet wird. Darüber hinaus kann in Spritzgießtechnik ein "Monosandwich"-Verfahren nach der DE 100 01 010 A1 eingesetzt werden, so dass während eines Spritzvorganges mehrere Kunststoffschmelzen in die Form eingespritzt werden. Hierdurch können Handhaben ausreichender Festigkeit mit relativ geringem Gewicht hergestellt werden. Nachteilig an der bekannten Handhabe ist jedoch, dass sie nicht die haptischen Bedürfnisse einer vollständig aus Metall bestehenden Handhabe erfüllen können.

Aus der DE 100 65 156 C1 ist eine Handhabe für Fahrzeuge bekannt, die im Wesentlichen aus einem Kunststoffmaterial besteht. Zur Erzeugung eines metallischen Charakters ist das Kunststoffformteil mit einer hochglanzpolierten metallischen Deckschicht versehen, die durch Plasmabeschichten aufgebracht worden ist. Es handelt sich hierbei jedoch um eine relativ dünne Schichtdicke von ca. 5 µm, was die Anforderungen hinsichtlich des haptischen Charakters einer Metallhandhabe nur bedingt erfüllt.

Aufgabe der vorliegenden Erfindung ist es daher, eine Handhabe für Fahrzeuge derart weiterzubilden, dass zum einen eine metallische Haptik realisiert und zum anderen eine größtmögliche Gewichtsreduzierung erzielt wird.

Zur Lösung dieser Aufgabe ist die Erfindung in Verbindung mit dem Oberbegriff des Patentanspruchs 1 gekennzeichnet durch ein Außenteil enthaltend ein Metallmaterial und durch ein Innenteil enthaltend ein Kunststoffmaterial, wobei das Außenteil mit dem Innenteil kraftschlüssig und/oder formschlüssig und/oder stoffschlüssig verbunden ist.

Grundgedanke der Erfindung ist es, eine Handhabe aus zwei miteinander zu verbindenden Teilen zu bilden, wobei ein erstes Teil (Außenteil) aus einem Metallwerkstoff und ein zweites Teil (Innenteil) aus einem Kunststoffmaterial unabhängig voneinander hergestellt worden sind. Vorteilhaft hat somit die Handhabe nicht nur einen optischen, sondern auch einen haptischen Metallcharakter, wobei durch das aus dem Kunststoffmaterial bestehende Innenteil das Gewicht der Handhabe insgesamt relativ gering gehalten werden kann. Das Innenteil kann auch wesentlich zu der Festigkeit bzw. Steifigkeit der Handhabe beitragen.

Die Verbindung zwischen dem metallischen Außenteil und dem aus einem Kunststoffmaterial bestehenden Innenteil kann nach einer bevorzugten Ausführungsform durch Verrastung und/oder durch Vernieten und/oder durch Verkleben erfolgen. Dadurch, dass die Verbindung in einem nach außen hin nicht sichtbaren Bereich erfolgt, wird der metallische Charakter der Handhabe bzw. die metallische Wertanmutung nicht gestört.

Nach einer Weiterbildung der Erfindung ist das Außenteil als ein Metalldruckgießteil ausgebildet, das mit einem galvanisch hergestellten Metallüberzug versehen sein kann. Das Metalldruckgießteil bildet eine sichere Haftung für die galvanische Oberfläche. Hierdurch ist eine hochdekorative Oberfläche gebildet, die eine Handhabe in Leichtbauweise mit relativ hoher Stabilität und relativ geringen Herstellkosten ermöglicht.

Weitere Vorteile der Erfindung ergeben sich aus den weiteren Unteransprüchen.

Ausführungsbeispiele der Erfindung werden nachfolgend anhand der Zeichnungen näher erläutert.

### Es zeigen:

- Figur 1: eine perspektivische Rückansicht einer Handhabe nach einer ersten Ausführungsform in einer Explosionsdarstellung,
- Figur 2: eine Draufsicht auf die Handhabe gemäß Figur 1,
- Figur 3: eine Seitenansicht der Handhabe gemäß Figur 1,
- Figur 4: einen Querschnitt durch die,Handhabe gemäß Figur 3 entlang der Linie IV-IV,
- Figur 5: eine perspektivische Rückansicht einer Handhabe nach einer zweiten Ausführungsform in einer Explosionsdarstellung,
- Figur 6: eine Draufsicht auf die Handhabe gemäß Figur 5,
- Figur 7: eine Seitenansicht der Handhabe gemäß Figur 6,
- Figur 8: einen Querschnitt durch die Handhabe gemäß Figur 7 entlang der Linie XIII-XIII,
- Figur 9: eine perspektivische Rückansicht einer Handhabe nach einer dritten Ausführungsform in einer Explosionsdarstellung,
- Figur 10: eine Seitenansicht der Handhabe gemäß Figur 9 und
- Figur 11: einen Querschnitt durch die Handhabe gemäß Figur 10 entlang der Linie XI-XI.

Eine erfindungsgemäße Handhabe kann beispielsweise als Türgriff oder Türinnenbetätigungshebel für Fahrzeuge dienen. Alternativ kann die Handhabe auch als Griffteil für Sanitärarmaturen oder dergleichen eingesetzt werden, und zwar überall dort, wo ein Handbetätigungselement vorgesehen sein soll, das einen "echten" metallischen Charakter bei möglichst großer Gewichtsreduktion aufweisen soll.

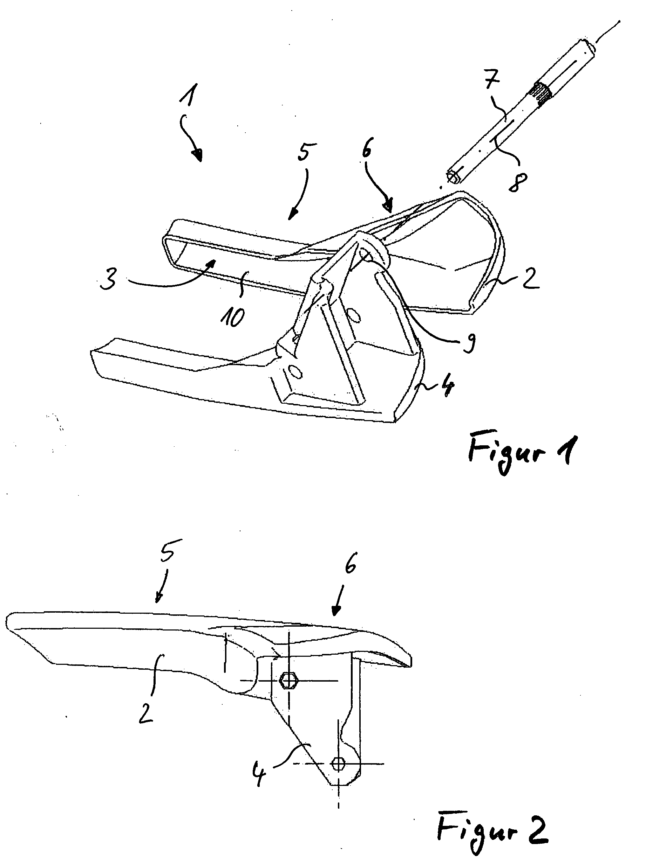

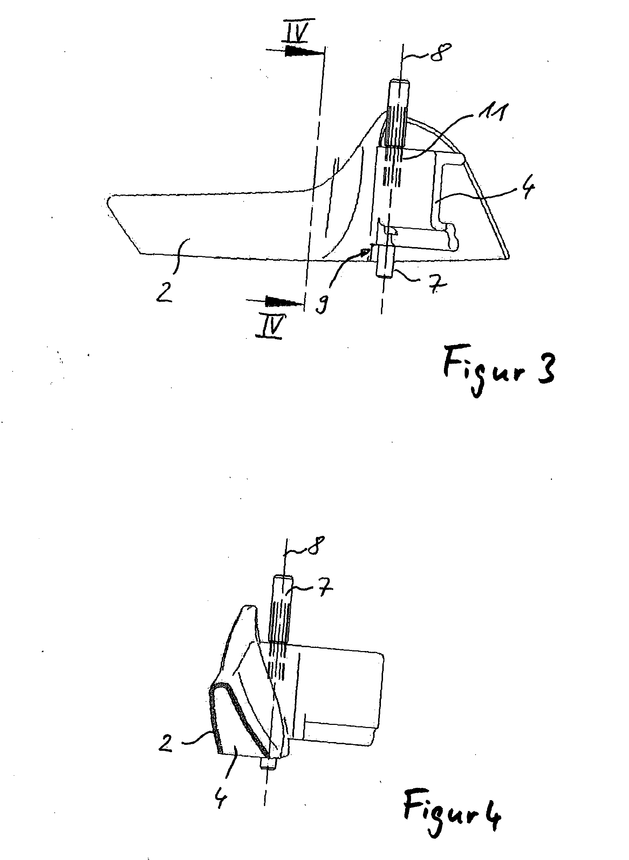

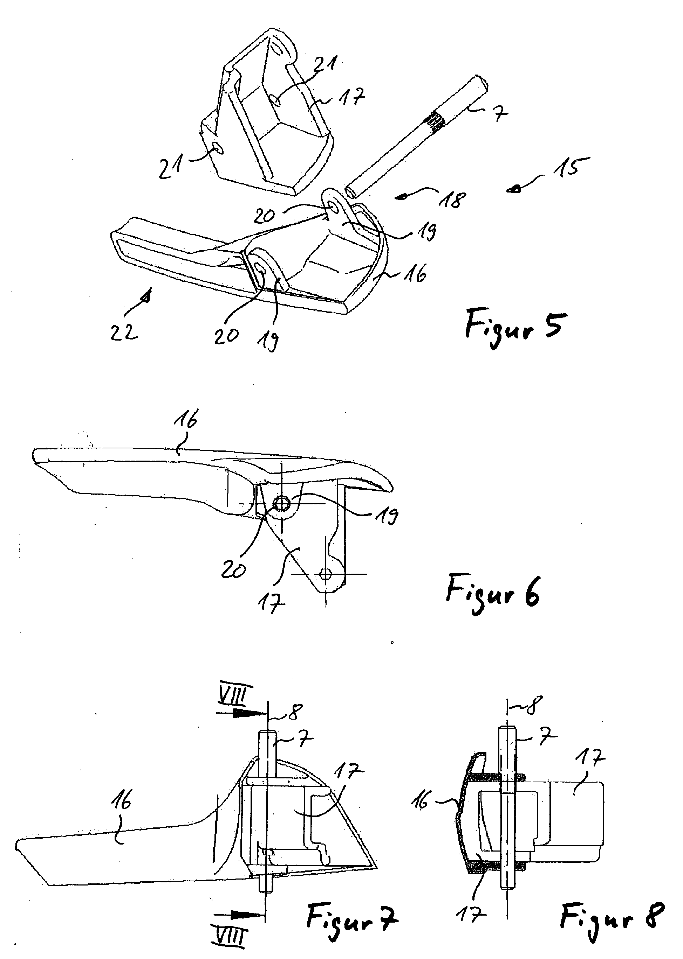

Eine Handhabe 1 nach einer ersten Ausführungsform einer Erfindung gemäß den Figuren 1 bis 4 besteht zum einen aus einem nach außen hin sichtbaren metallischen Außenteil 2 und einem in eine Ausnehmung 3 eingefassten Innenteil 4 bestehend aus einem Kunststoffmaterial.

Das Außenteil 2 ist aus einem Zinndruckgießteil hergestellt und weist zum einen in einem Griffabschnitt 5 der Handhabe 1 einen lang gestreckten Abschnitt zum manuellen Erfassen der Handhabe 1 und zum anderen in einem Anlenkungsabschnitt 6 der Handhabe 1 einen wulstförmigen Abschnitt auf, der sich an den lang gestreckten Abschnitt anschließt und eine bewegbare (schwenkbare) Anbindung des Griffabschnitts 5 an ein Lagerteil des Fahrzeugs bewirkt. Als Lagerteil kann ein Lagerzapfen 7 vorgesehen sein, der eine Drehachse 8 bildet, um den die Handhabe 1 verschwenkbar ist. Im vorliegenden Ausführungsbeispiel ist der Lagerzapfen 7 in zueinander fluchtende Bohrungen 9 des Innenteils 4 gelagert. Dadurch, dass das Innenteil 4 fest mit dem Außenteil 2 verbunden ist, ist der Anlenkungsabschnitt 6 des Außenteils 2 nur mittelbar mit dem Lagerzapfen 7 verbunden.

Das Innenteil 4 erstreckt sich vollständig über den Griffabschnitt 5 und den Anlenkungsabschnitt 6 und ist derart geformt, dass es in der nach innen weisenden Ausnehmung 3 des Außenteils 2 flächig an einer Innenseite 10 des Außenteils 2 anliegt. Das Außenteil 2 bildet hierbei ein Hüllenteil, das das Innenteil 4 als Kernteil zumindest im Griffabschnitt 5 vollständig einfasst. Das Kernteil 4 füllt somit die Ausnehmung 3 im Griffabschnitt 5 vollständig aus. Dadurch, dass die Wandstärke des Hüllenteils 2 mindestens 1 mm, vorzugsweise 1,5 mm, beträgt, ist der Metallcharakter der Handhabe 1 gewährleistet, wobei das Kernteil 4 zur Festigkeit bzw. Steifigkeit sowie Gewichtsreduzierung der Handhabe 1 wesentlich beiträgt. Darüber hinaus bildet das Kernteil 4 im Anbindungsabschnitt 6 eine Schwenklagerung 11, die mit dem Lagerzapfen 7 zur Verschwenkbarkeit der Handhabe 1 zusammenwirkt.

Das Innenteil 4 und das Außenteil 2 werden gesondert hergestellt; das Innenteil 4 ist aus einem thermoplastischen Kunststoffmaterial spritzgegossen, während das metallische Außenteil 2 durch Metalldruckgießen hergestellt ist. Das Außenteil 2 ist vorzugsweise mit einem galvanisch hergestellten Metallüberzug aus Chrom, Nickel oder dergleichen versehen. Die Verbindung zwischen dem Außenteil 2 und dem Innenteil 4 kann kraftschlüssig und/oder formschlüssig und/oder stoffschlüssig erfolgen.

Nach einer ersten Verbindungsvariante ist das Außenteil 2 durch Verrastung mit dem Innenteil 4 verbunden. Hierzu weist das Außenteil 2 bzw. das Innenteil 4 nicht dargestellte Rastelemente auf.

Nach einer zweiten Verbindungsvariante kann die Montage der beiden Teile 2 und 4 zweistufig erfolgen, wobei in einer ersten Stufe das Außenteil 2 mit dem Innenteil 4 verrastet wird. In einer zweiten Stufe wird das Außenteil 2 mit dem Innenteil 4 verklebt oder vernietet.

Nach einer weiteren Verbindungsvariante können das Außenteil 2 und das Innenteil 4 lediglich durch Verkleben miteinander verbunden sein.

Nach einer weiteren Verbindungsvariante kann in die Ausnehmung 3 des fertig gestellten Hüllenteils 2 das Kernteil 4 durch Einspritzen einer Kunststoffmasse hergestellt werden. Im Anschluss daran kann dann die aus den beiden Teilen 2 und 4 bestehende Handhabe 1 geschliffen, poliert und mit einem galvanisch hergestellten Metallüberzug versehen werden.

Die beschriebenen Verbindungsvarianten gelten nicht nur für die erste Ausführungsform der Handhabe 1, sondern auch für weitere im Folgenden beschriebene bzw. weitere anders geformte Handhaben.

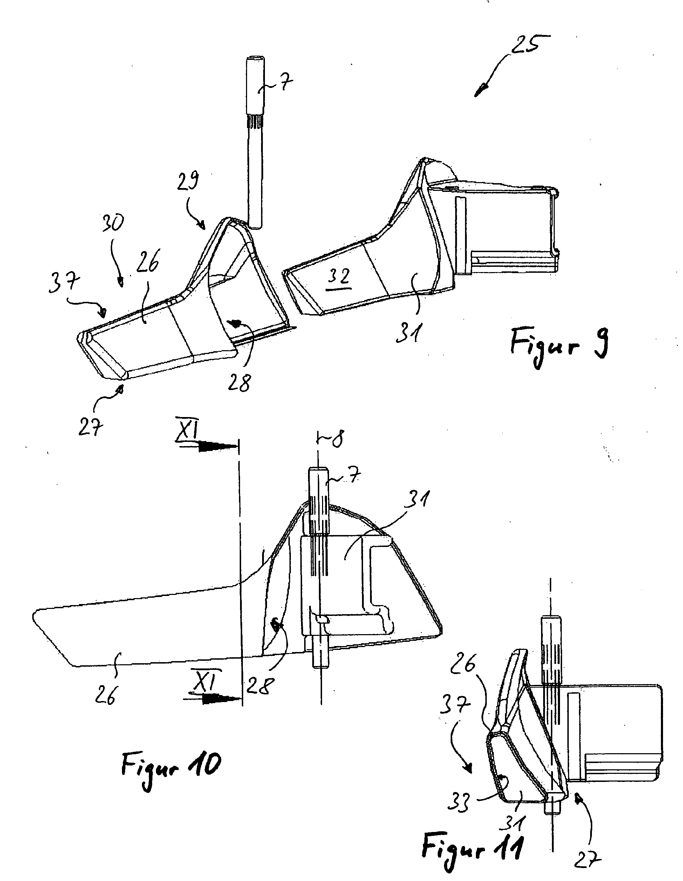

Eine Handhabe 15 nach einer zweiten Ausführungsform gemäß den Figuren 5 bis 8 besteht zum einen aus einem metallischen Außenteil 16 und einem aus Kunststoffmaterial bestehenden Innenteil 17. Das Außenteil 16 ist als relativ dünnwandiges Zinkdruckgießteil ausgebildet. Im Unterschied zu dem vorhergehenden Ausführungsbeispiel weist das Außenteil 16 in einem Anlenkungsabschnitt 18 der Handhabe 15 nach innen abragende Lagerabschnitte 19 mit zueinander fluchtenden Bohrungen 20 zur Aufnahme des Lagerzapfens 7 auf. Übereinstimmende Bauteile sind in den Ausführungsbeispielen mit den gleichen Bezugsziffern versehen.

Das Innenteil 17 ist als ein Kunststoffprofil ausgebildet, das sich lediglich in dem Anlenkungsabschnitt 18 erstreckt und durch Einklipsen (Verrasten) in die Einbaulage gemäß den Figuren 6 bis 8 unter Fluchten von Bohrungen 21 des Innenteils 17 zu den Bohrungen 20 der Lagerabschnitte 19 verbracht wird. Durch späteres Einsetzen des Lagerzapfens 7 in die Bohrungen 20, 21 ist eine feste Verbindung zum einen zwischen dem Außenteil 16 und dem Innenteil 17 einerseits und dem Lagerteil andererseits gegeben. Das Innenteil 17 ist vorzugsweise aus einem formstabilen Kunststoffmaterial gespritzt, das der Handhabe 15 die erforderliche Steifigkeit verleiht.

Das Innenteil 17 weist vorzugsweise eine Kontur auf, die mit einer Kontur des Außenteils 16 übereinstimmt, so dass das Innenteil 17 und das Außenteil 16 unmittelbar aneinander liegen. In einem Griffabschnitt 22 der Handhabe 15 ist das Außenteil 16 hohlförmig ausgebildet.

Nach einer weiteren Ausführungsform einer Handhabe 25 gemäß den Figuren 9 bis 11 ist ein metallisches Außenteil 26 vorgesehen, das im Gegensatz zu den vorherigen Außenteilen auf einer Rückseite 27 der Handhabe 25 geschlossen ausgebildet ist. Das Außenteil 26 bildet eine Tasche mit einer Öffnung 28, die sich in einem zu einem Anlenkungsabschnitt 29 zugewandten Endbereich eines Griffabschnitts 30 der Handhabe 25 angeordnet ist. Auf diese Weise lässt sich ein massives, aus Kunststoffmaterial bestehendes Innenteil 31 unter flächiger Anlage einer Außenseite 32 des Innenteils 31 an eine Innenseite 33 des Außenteils 26 von dem Anlenkungsabschnitt 29 her in die Tasche des Außenteils 26 einsetzen. Die Verbindung des Außenteils 26 und des Innententeils 31 kann dann - wie oben beschrieben - durch Verrasten, durch Verkleben, durch Vernieten oder einer Kombination dieser Verbindungsarten hergestellt werden. Eine dem Anlenkungsabschnitt 29 abgewandte Stirnseite des Griffabschnitts 30 des Außenteils 26 ist geschlossen ausgebildet, so dass das Erscheinungsbild der Handhabe 25 unabhängig von der Verschwenkstellung derselben im Wesentlichen durch das metallische Außenteil 26 geprägt wird.

Anschließend wird der Lagerzapfen 7 durch entsprechende Bohrungen des Außenteils 26 und des Innenteils 31 eingeführt, so dass eine schwenkbare Lagerung der Handhabe 25 an einem nicht dargestellten Lagerteil gegeben ist.

Die Handhabe 25 zeichnet sich dadurch aus, dass nicht nur eine Vorderseite 37, wie bei den Handhaben 1 und 15, sonder auch die Rückseite 27 nach außen hin durch das metallische Außenteil 26 gebildet ist. Somit hat der Nutzer nicht nur bei Erfassen der Vorderseite 37, sondern auch bei Erfassen der Rückseite 27 der Handhabe 25 den gewünschten metallischen haptischen Effekt.

Die vorliegenden Handhaben 1, 15, 25 sind jeweils lang gestreckt ausgebildet, wobei die Drehachse 8 im Wesentlichen senkrecht zu der Längserstreckung der Handhaben 1, 15, 25 orientiert ist.

## Patentansprüche

1. Handhabe für Fahrzeuge mit einem Griffabschnitt zum manuellen Erfassen der Handhabe und mit einem Anlenkungsabschnitt zur bewegbaren Anbindung des Griffabschnitts an ein Lagerteil, **gekennzeichnet durch** ein Außenteil (2, 16, 26) enthaltend ein Metallmaterial und **durch** ein Innenteil (4, 17, 31) enthaltend ein Kunststoffmaterial, wobei das Außenteil (2, 16, 26) mit dem Innenteil (4, 17, 31) kraftschlüssig und/oder formschlüssig und/oder stoffschlüssig verbunden ist.

2. Handhabe nach Anspruch 1, **dadurch gekennzeichnet, dass** das Außenteil (2, 16, 26) und das Innenteil (4, 17, 31) durch Verrastung und/oder durch Vernieten und/oder durch Verklebung miteinander verbunden sind.

3. Handhabe nach Anspruch 1, **dadurch gekennzeichnet, dass** das Innenteil (4) von einer Rückseite (27) in das Außenteil (2) eingespritzt ist.

4. Handhaben nach einem der Ansprüche 1 bis 3, **dadurch gekennzeichnet, dass** das Außenteil (2, 16, 26) als ein Metalldruckgießteil, insbesondere als ein Zinkdruckgießteil, ausgebildet ist.

5. Handhabe nach Anspruch 4, **dadurch gekennzeichnet, dass** das Metalldruckgießteil mit einem galvanisch hergestellten Überzug versehen ist.

6. Handhabe nach einem der Ansprüche 1 bis 5, **dadurch gekennzeichnet, dass** das Innenteil (4, 17, 31) als ein Kunststoffspritzgießteil ausgebildet ist, das auf einer dem Außenteil (2, 16, 26) zugewandten Seite mit einer Kontur versehen ist, die mit der Kontur des Außenteils (2, 16, 26) übereinstimmt.

7. Handhabe nach einem der Ansprüche 1 bis 6, **dadurch gekennzeichnet, dass** das Außenteil (2, 16, 26) und/oder das Innenteil (4, 17, 31) derart ausgebildet ist, dass das Innenteil (4, 17, 31) von einer Rückseite (27) oder einer Stirnseite des lang gestreckten Außenteils 2, 16, 26) her an dasselbe anlegbar und befestigbar ist.

8. Handhabe nach einem der Ansprüche 1 bis 7, **dadurch gekennzeichnet, dass** das Außenteil (2, 26) als ein Hüllenteil und das Innenteil (4, 31) als ein Kernteil ausgebildet ist, wobei das Hüllenteil (2, 26) flächig an dem Kernteil (4, 31) anliegt.

9. Handhabe nach einem der Ansprüche 1 bis 8, **dadurch gekennzeichnet, dass** das Innenteil (17) derart geformt ist, dass es lediglich in einem Anlenkungsabschnitt (18) mit dem Außenteil (16) verbunden ist.

10. Verwendung der Handhabe nach einem der Ansprüche 1 bis 9 als ein Türinnenbetätigungshebel für Fahrzeuge.
